# EUROPEAN PATENT APPLICATION

(11) **EP 1 253 071 A2**
(43) Date of publication of application: **30.10.2002**
(21) Application number: 02425266.0
(22) Date of filing: 26.04.2002
(51) Int. Cl.: B62J 9/00

(54) **Universal support for containers in general for motorcycling use**

(30) Priority: 27.04.2001 IT BS20010031
(71) Applicant: Vanessa di Pennacchio Silvana & C. S.n.c., 25125 Brescia (IT)
(72) Inventor: Pennacchio, Silvana, 25125 Brescia (IT)
(74) Representative: Manzoni, Alessandro

(57) **Abstract**

This invention concerns a universal support for attaching containers to motorcycles, particularly, but not exclusively, to their petrol tanks. The support consists of adhesive elements (3-4) with appendices (6) for fixing hooks (7) on elastic tabs (8-8') attached to the lower surface of a container (2).

## Description

The subject of this invention is a support for containers to be attached to motorcycles which permits rapid and safe use on any type of motorcycle independently of the conformation of the part where it is to be applied.

### State of the Technique

It is well known that one of the main problems with motorcycles concerns the availability of containers for transporting the user's effects. What has been put forward to date - for example rigid bags, additional panniers, map cases and similar - presents the problem of compatibility of structure and shape between the container and the part of the motorcycle where it is to be fixed. A connecting structure, specific to each individual motorcycle, must be interposed between the latter and the container which, in turn, must be compatible with the said structure.

A further problem derives from the materials, not always metal, with which the motorcycle bodywork is built.

### Purpose of the Invention

The purpose of this invention is to eliminate the above problems by means of a connecting support between motorcycle and container which can be applied to any motorcycle independently of the shape and material of the part where it is to be attached, thus making it universal.

### Description of the Invention

The invention in question is described with reference to the indicative and not limitative drawing attached herewith, in which:
- Fig. 1 shows a motorcycle petrol tank;
- Fig. 2 shows a container to be attached to the petrol tank; and
- Fig. 3 schematically shows a motorcycle equipped with the container shown in Fig. 2.

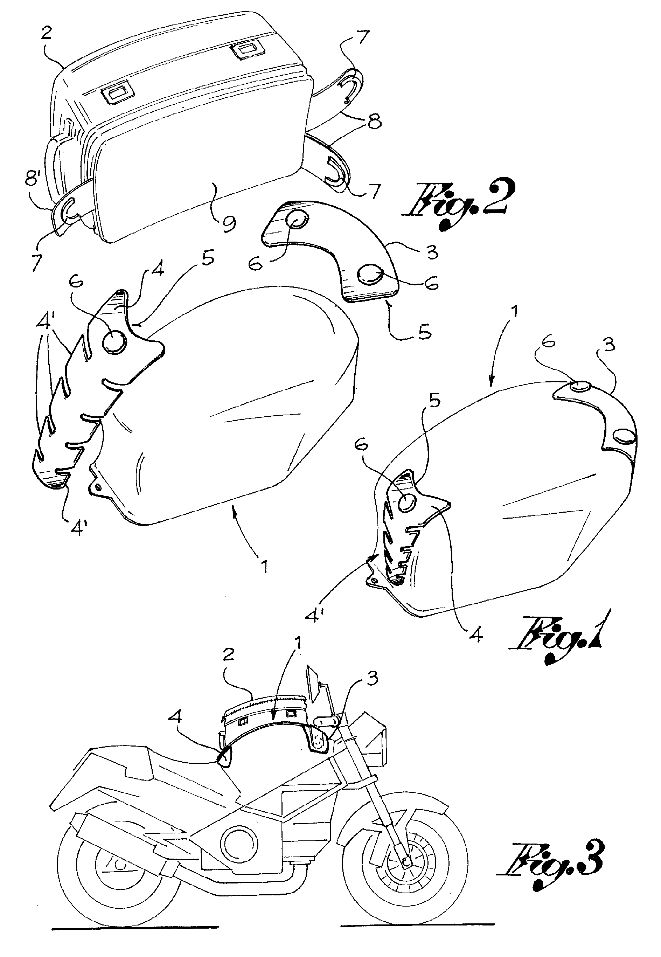

The solution illustrated here, merely by way of example, refers to the application of

the support in question to a motorcycle tank. In fact it is well known that the problem of attaching containers to tanks is considerable due to the vrariety of tank conformations.

In concordance with the invention, 1 is a motorcycle tank which may be of any shape or material whatsoever, while 2 is a container of any shape and material.

The support in question consists of at least two elements 3 and 4, in flexible material such as rubber or soft plastic, whose underside surface 5 is coated with highly adhesive material.

Element 4 is an elongated form equipped with a plurality of sectors 4' which are also adhesive.

Elements 3 and 4 have, moreover, appendices 6 for fixing hooks 7 applied to the front and rear elastic tabs 8' which are suitably fixed to the base 9 of the container 2.

In concordance with the invention, element 3 of the connecting support is attached, by means of adhesive surface 5, to the motorcycle tank 1 and, thanks to its adaptability to the shape of the latter, will be in all cases suitable to permit the fixing of hooks 7 to the appendices 6 envisaged on element 3.

Analogously and consequently element 4 will be attached to the tank where tab 8' of container 2 is situated, obviously taking into account the necessary tensioning of elastic tabs 7.

As mentioned above, element 4 has an elongated form with sectors 4' which are also adhesive.

These sectors, where necessary, serve to increase the surface area in contact with the tank. Otherwise they can be cut and eliminated if the shape of the tank so requires. From what has been described and illustrated, the structure's universality of application is evident: it can also be used on non-metal tanks and on other parts of the motorcycle such as, for example, the protective shield of a scooter or other parts of the vehicle's bodywork.

## Claims

1. Universal support for motorcycling containers in general, **characterised by** the fact that it has at least two elements (3-4) of connection between a petrol tank (1) or another part of a motorcycle, and a container (2).

2. Universal support in accordance with claim 1, **characterised by** the fact that the elements (3-4) are suitably equipped with appendices (6) for fixing hooks (7) attached to tabs (8-8') fixed to lower surface (9) of the container (2), the said tabs (8-8') being in elastic material.

3. Universal support in accordance with the preceding claims, **characterised by** the fact that the elements (3-4) have their underside surface (5) coated with highly adhesive material.

4. Universal support in accordance with claims 2 and 3, **characterised by** the fact that element (4) has a plurality of sectors (4') which are removable or utilisable in relation to the shape of the tank or the part of the motorcycle to which the element is to be attached
